# EUROPEAN PATENT APPLICATION

(11) **EP 3 124 741 A1**
(43) Date of publication of application: **01.02.2017**
(21) Application number: 15769703.8
(22) Date of filing: 27.03.2015
(51) Int. Cl.: E21B 43/26, C09K 8/80

(54) **SELF-SUSPENDING PROPPANT AND PREPARATION AND USE THEREOF**

(30) Priority: 28.03.2014 CN 201410123724; 28.03.2014 CN 201410124576; 28.03.2014 CN 201410124455; 28.03.2014 CN 201410124452; 28.03.2014 CN 201410123922; 28.03.2014 CN 201410123908; 28.03.2014 CN 201410124182
(71) Applicant: Beijing Rechsand Science&Technology Group Co. Ltd, Beijing 100085 (CN)
(72) Inventor: QIN, Shengyi, Beijing 100085 (CN); HU, Wenjin, Beijing 100085 (CN); WANG, Zhongxue, Beijing 100085 (CN); HU, Wei, Beijing 100085 (CN)
(74) Representative: Noréns Patentbyrå AB
(86) International application number: PCT/CN2015/075289
(87) International publication number: WO 2015/144091

(57) **Abstract**

A self-suspending proppant is a particulate aggregate coated with or partly coated with water soluble polymer material; the aggregate is a solid particle having enough mechanical strength for bearing the closure stress of fractures, and is selected from one or more of quartz sand, ceramicite, metal particles, spherical glass particles, sintered bauxite, sintered alumina, sintered zirconia, synthetic resin, coated sand, and crushed nutshell particles; the amount of the water soluble polymer material is 0.1-5wt% based on the amount of the aggregate. With the self-suspending proppant of the present invention, fracturing does not need the use of expensive fracturing fluids with added organic polymers, and easily available natural water can be directly used for fracturing, thus reducing pollution and costs; and the self-suspending proppant of the present invention can reduce the frictional resistance of the fracturing fluid, so that the fracturing propping system of the present invention has substantially the same performance as the existing fracturing fluid and is easy to transport and easy to backflow.

## Description

### Field of the Invention

The present invention belongs to the field of exploitation of fluid minerals such as oil, natural gas, shale gas and the like, and particularly to a proppant for reinforcing a fracture by propping and preparation and use thereof.

### Background of the Invention

Since crude oil from oilfields has high viscosity, the fractures of reservoir are narrow, in order to improve the oil production and reduce the cost, a fracturing proppant is typically used for fracturing and propping a fracture to improve the fluid guiding ability of the fracture. The proppant is deposited in the formed fracture of the formation to prevent the fracture from closing when the pressure decreases. According to introduction of documents, three fluid systems are mainly applied in shale gas fracturing in the United States: direct injection of liquid nitrogen, injection of nitrogen foam and injection of reduction friction water. Besides the cost advantage, reduction friction water can be pumped at a high output volume, with a large amount of water and a small amount of proppant, it can bring the proppant to enter into a deeper fracture network to form larger fracture network and gas leakage area, which is now a standard operating procedure for fracturing operation. In the composition of the reduction friction water, the vast majority (99.5%) is clean water, so the reduction friction water is also known as clean water fracturing (Jie zhao et al., Review on completion and fracturing technology of horizontal shale gas well, Natural Gas and Petroleum, February 2012)

Current proppant fracturing techniques mainly include: using two parts, i.e., a proppant and a fracturing fluid (active water, linear adhesive or gel). The fracturing fluid and the proppant are two independent systems, the fracturing fluid flows at high a speed, to suspend the proppant through turbulent flow. However, when the proppant reaches the fracture, as a result of a significant decrease of the fluid flow rate, the proppant rapidly settles to the bottom of the fracture (Patent literature CN 102159797 A). On the other hand, polymer compounds used in the reduction friction water enter the formation along with clean water, and the viscosity of the reduction friction water increases, so that very large pumping power is consumed at the time of backflow, and is not favorable for the backflow of all the reduction friction water; and part of polymer compounds remained underground block pores of the formation, resulting in a drop of oil yield.

### Summary of the Invention

In view of the shortcomings in the prior art, it is the first object of the present invention to provide a self-suspending proppant.

It is a further object of the present invention to provide a preparation method of the self-suspending proppant.

A third object of the present invention is to provide the use of the self-suspending proppant.

The technical solution to achieve the above objects is:
A self-suspending proppant, which is a particulate aggregate coated with or partly coated with a water-soluble polymer material.

The aggregate is a solid particle having sufficient mechanical strength to withstand fracture closure stress, and selected from one or more of quartz sand, ceramicite, metal particles, spherical glass particles, sintered bauxite, sintered alumina, sintered zirconia, synthetic resin, a coated sand, and crushed nutshell particles; the metal particle is made from one or more of carbon steel, stainless steel, aluminum alloy, iron-nickel alloy and ferromanganese alloy.

The water-soluble polymer material is selected from the group consisting of a natural polymer, a synthetic polymer or a semi-natural semi-synthetic polymer material, and the water-soluble polymer is used in an amount of 0.1-15wt% based on the amount of the aggregate.

Preferably, the aggregate has a size of 6-200 mesh.

The water-soluble polymer material of the present invention is an organic material, which swells or is dissolved rapidly in water, and is selected from a natural polymer material, a synthetic polymer material or a semi-natural semi-synthetic polymer material.

The natural polymer material is selected from starch, plant gum, animal glue or seaweed glue; the plant gum is one or more of gum arabic, gum tragacanth, locust bean gum, guar gum, sesbania gum and soybean gum; the animal glue is one or more of bone glue, gelatin, casein and chitosan; and the seaweed gel is one or more of sodium salt of alginic acid, sodium alginate and agar.

The synthetic polymer material includes condensed and polymeric polymer materials, wherein, the condensed polymer material is selected from one or more of polyamine resin, amino resin and polyurethane resin; and the polymeric polymer material is selected from one or more of polyacrylamide, polyacrylic acid, polyethylene glycol, polyethylene oxide, polymaleic anhydride and polyquaternium;

The semi-natural semi-synthetic polymer material includes modified starch, modified cellulose and modified plant gum, and is specifically selected from one or more of starch derivatives, carboxymethyl starch, hydroxymethyl cellulose, methyl cellulose, ethyl cellulose, hydroxyethyl cellulose, carboxyethyl starch, acetate starch, hydroxymethyl guargum, hydroxypropyl guargum, and carboxymethyl hydroxypropyl guargum.

Further, the particulate aggregate is preferably coated with an adhesive, the adhesive includes all materials having the function of adhesion, including a natural adhesive and a synthetic adhesive, the natural adhesive includes animal glue, plant gum and mineral glue; the animal glue is selected from one or more of skin glue, bone glue, shellac, casein glue, albumin glue and fish glue; the plant gum is selected from one or more of starch, dextrin, turpentine, tung oil, gum arabic and natural rubber; the mineral glue is selected from one or more of mineral wax and asphalt; the synthetic adhesive is selected from one or more of phenolic resin, epoxy resin, unsaturated polyester resin and heterocyclic polymer adhesive, and the amount of the adhesive is 0.5-15wt% based on the amount of aggregate.

The phenolic resin is thermoplastic phenolic resin and/or thermosetting phenol resin.

The epoxy resin is selected from one or more of epoxy resins E-42, E-35, E-20(601), E-14, E-12, E-06 and E-03; or the epoxy resin is the epoxy resin with epoxy equivalent of 0.09-0.14mol/100g; it is preferably one or more of bisphenol-A epoxy resin, epoxy resins E-55(616), E-51(618), E-44(6101), E-42(634), E-35(637), E-20(601), E-12(604), E-06(607) and E-03(609).

The unsaturated polyester resin is one or more of o-phthalate unsaturated polyester resin, m-phthalate unsaturated polyester resin, xylene type unsaturated polyester resin, bisphenol-A unsaturated polyester resin, halogenated unsaturated polyester resin and vinyl ester resin; the unsaturated polyester resin is preferably one or more of o-phthalate unsaturated polyester resin 191 or 196, m-phthalate unsaturated polyester resin 199, xylene type unsaturated polyester resins 2608, 902A3, Xm-1 and Xm-2, and bisphenol-A unsaturated polyester resins 197, 3301 and 323; and the heterocyclic polymeric adhesive is selected from one or more of polyimide, polybenzimidazole, polyphenylene sulfide and polydiphenyl oxide.

The present invention provides preparation method of the self-suspending proppant. As one solution, the self-suspending proppant is prepared by dispensing a water soluble polymer material in an aggregate.

Specifically, the preparation method of the self-suspending proppant is preparing the suspending proppant by dispensing a water soluble polymer material in an aggregate at a temperature of 15-150°C.

The water soluble polymer material is one selected from plant gum, animal glue or microbial glue, and the amount of the water soluble polymer material is 0.5-15wt% based on the amount of the aggregate.

Preferably, the preparation method is heating the aggregate to 170-200°C at first, and then dispensing a water soluble polymer material in the aggregate after the temperature of the aggregate is decreased to 80-150°C.

More preferably, the preparation method includes: using 6-200 meshes particles as the aggregate, adding an adhesive solution into the aggregate and stirring, wherein the adhesive solution is 10-30% of the aggregate by weight, and adding a water soluble polymer material in an amount of 0.1-5% of the aggregate by weight and stirring; the solvent of the adhesive solution is an organic solvent, the organic solvent is selected form one or more of acetone, ethyl acetate, methyl acetate, chloroform, dimethylformamide, tetrahydrofuran, and ethanol.

According to the present invention, the preparation method of the self-suspending proppant may also be dispensing an adhesive in an aggregate, adding a curing agent, and adding a water soluble polymer material to obtain the self-suspending proppant. Or, the preparation method of the self-suspending proppant may also be dispensing an adhesive in an aggregate, adding a water soluble polymer material, and adding a curing agent to obtain the self-suspending proppant.

The curing agent is one of aliphatic amine and the adduct thereof, tertiary amine and the salt thereof, aromatic amine and the modified product thereof, imidazole, anhydride, peroxide, acyl peroxide, lipid peroxide, paraformaldehyde, phenol-aldehyde amine, diethylenetriamine, triethylenetetramine, and hexamethylenetetramine; and the curing agent is 0.5-10% of the adhesive by weight.

More specifically, the preparation method of the self-suspending proppant includes the following steps:
1) using one or more of quartz sand, ceramicite, metal particles, spherical glass particles, sintered bauxite, sintered alumina, sintered zirconia, synthetic resin, coated sand and crushed nutshell particles as an aggregate;
   heating to 50-300°C, cooling to below 240°C adding an adhesive in an amount of 0.5-15wt% of the aggregate by weight and stirring;
2) when the temperature of the mixture obtained in step 1) is decreased to below 150°C, adding a water soluble polymer material in an amount of 0.1-5wt% of the aggregate by weight, and stirring;
wherein, a curing agent is added in step 1) or step 2).

Or the preparation method includes the following steps:
1) using one or more of quartz sand, ceramicite, coated sand, metal particles, spherical glass particles, sintered bauxite, sintered alumina, sintered zirconia, synthetic resin and crushed nutshell particles as an aggregate; adding an adhesive with the weight accounting for 0.5-15wt% of the aggregate weight and stirring;
2) adding a water soluble polymer material in an amount of 0.1-5wt% of the aggregate weight, adding a curing agent and stirring,
wherein, the preparation method also includes steps of cooling and screening after step 2).

The present invention also provides a construction method for fracturing with natural water, which includes adding 5-60 volume parts of the self-suspending proppant of the present invention into 100 volume parts of natural water as a carrier fluid to form hydraulic fracturing suspension fluid, then transporting the resultant suspension fluid into an underground rock formation; the natural water as a carrier fluid being selected from one or more of river water, aquaculture water, lake water, seawater and groundwater.

According to the present invention, the construction method includes specifically: firstly using one of gel, linear adhesive, slick water or natural water as a pad fluid, pumping the pad fluid with a high-pressure pumper and fracturing a target reservoir to form an initial geological fracture; then continuously adding natural water as a carrier fluid to a mix tank, and adding the self-suspending proppant while stirring to form a suspension fluid of the natural water and the proppant; and continuously pumping the suspension fluid, following the pad fluid, into the initial geological fracture by using a high-pressure pumper, so that the initial geological fracture is continuously extended to form a geological fracture propped by the proppant.

The rock formation is one of rock formation, shale formation, salt formation and sedimentary formation of a heavy oil reservoir.

The present invention has the following advantages:
By use of self-suspending proppant proposed by the present invention, the fracturing does not need use of high-cost fracturing fluid with added organic polymer, but directly uses easily available natural water; therefore, it reduces pollution and cost.

The self-suspending proppant of the present invention has the advantages of long suspension time in clean water, and can better meet the need of oil extraction. The self-suspending proppant of the present invention can reduce the frictional resistance of the fracturing fluid, so that the fracturing proppant system of the present invention has substantially the same property as the existing fracturing fluid and is easy to transport and discharge.

The self-suspending proppant of the present invention can realize fracturing propping in clean water, so that the consumed power for backflow is reduced, and there is no residual polymer material, which is favorable for environment protection.

### Brief Description of the Drawings

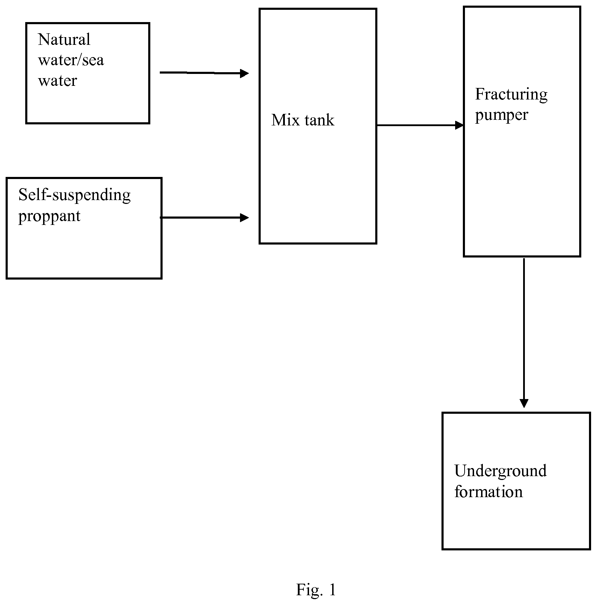

Figure 1 is a flow diagram for oil extraction using a self-suspending proppant of the present invention.

### Detailed Description of the Embodiments

The following examples are used for illustrating the present invention, but are not intended to limit the scope of the present invention.

The materials used in the examples are commercially available.

### Example 1

The example provides a self-suspending proppant, which was prepared by the following steps:
1) using quartz sand (river sand) as a raw material, scrubbing and drying the same at 120°C for 5h till no water is contained in the sand at all, and screening 20-40 meshes quartz sand as the aggregate;
2) taking the aggregate 1000g, heating the same to 200°C, adding epoxy resin E14 10g, and stirring uniformly;
3) when the temperature of the mixture obtained in step 2) was decreased to 140°C, adding carboxymethyl cellulose 8 g, stirring evenly, crushing and screening after cooling.

The proppant obtained after screening is a particle having a particle size of 20-40 meshes, and the surface of the aggregate is coated or partially coated with a carboxymethyl cellulose polymer material.

### Example 2

The example provides a self-suspending proppant, which was prepared by the following steps:
1) taking 40-70 meshes quartz sand (river sand) 1kg as an aggregate for later use;
2) heating the aggregate to 200°C, adding epoxy resin E-12 5g into the aggregate, adding polycaprolactone 10g when the temperature was decreased to 140°C, and mixing uniformly to obtain the product.

### Example 3

The example provides a self-suspending proppant, which was prepared by the following steps:
1) taking 30-50 meshes quartz sand (aeolian sand and sea sand with the same number of meshes and the same volume) 1kg as the aggregate for later use;
2) heating the aggregate to 180°C, adding o-phthalate unsaturated polyester 191 10g to the aggregate, adding carboxymethyl hydroxypropyl guargum 5g when the temperature was decreased to 130°C, and mixing uniformly ;
3) cooling the mixture obtained in step 2), and screening to obtain the product.

### Example 4

The example provides a self-suspending proppant, which was prepared by the following steps:
1) taking 30-50 meshes spherical ceramicite 1kg as the aggregate for later use;
2) heating the aggregate to 200°C, adding o-phthalate unsaturated polyester 191 10g to the aggregate, adding polymaleic anhydride 5g when the temperature was decreased to 140°C, and mixing uniformly;
3) cooling and screening the mixture obtained in step 2) to obtain the product.

### Example 5

The example provides a self-suspending proppant, which was prepared by the following steps:
1) taking 40-70 meshes spherical ceramicite 1kg as the aggregate for later use;
2) heating the aggregate to 220°C, adding bisphenol-A unsaturated polyester resin 12g to the aggregate, adding polyvinyl acetate 10g when the temperature was decreased to 140°C, and mixing uniformly;
3) cooling and screening the mixture obtained in step 2) to obtain the product.

### Example 6

The example provides a self-suspending proppant, which was prepared by the following steps:
1) taking 30-50 meshes stainless steel particles 1kg as the aggregate for later use;
2) heating the aggregate to 190°C, adding o-phthalate unsaturated polyester 191 10g to the aggregate, adding anionic polyacrylamide 5g when the temperature was decreased to 130°C, and mixing uniformly;
3) cooling and screening the mixture obtained in step 2) to obtain the product.

### Example 7

The example provides a self-suspending proppant, which was prepared by the following steps:
1) taking 70-140 meshes glass microspheres 1kg as the aggregate for later use;
2) heating the aggregate to 220°C, adding bisphenol-A unsaturated polyester resin 12g to the aggregate, adding polyvinyl acetate 10g when the temperature was decreased to 140°C, and mixing uniformly;
3) cooling and screening the mixture obtained in step 2) to obtain the product.

### Example 8

The example provides a self-suspending proppant, which was prepared by the following steps:
1) taking 40-70 meshes coated sand 1kg (prepared according to the method in example 1 of patent literature CN1274626A) as the aggregate for later use;
2) heating the aggregate to 200°C, adding epoxy resin E12 8g to the aggregate, adding sesbania gum 10g when the temperature was decreased to 140°C, and mixing uniformly;
3) cooling and screening the mixture obtained in step 2) to obtain the product.

### Example 9

The example provides a self-suspending proppant, which was prepared by the following steps:
1) taking 40-70 meshes aluminum alloy spherical particles 1kg as the aggregate for later use;
2) heating the aggregate to 220°C, adding bisphenol-A unsaturated polyester resin 10g to the aggregate, adding polymaleic anhydride 10g when the temperature was decreased to 110°C, and mixing uniformly;
3) cooling and screening the mixture obtained in step 2) to obtain the product.

### Example 10

The example provides a self-suspending proppant, which was prepared by the following steps:
1) taking 40-70 meshes glass microspheres 1kg as the aggregate for later use;
2) heating the aggregate to 220°C, adding bisphenol-A unsaturated polyester resin 10g to the aggregate, adding hydroxypropyl guargum 6g when the temperature was decreased to 140°C, and mixing uniformly;
3) cooling and screening the mixture obtained in step 2) to obtain the product.

### Example 11

The example provides a self-suspending proppant, which was prepared by the following steps:
1) taking 40-70 meshes bauxite ceramicite 1kg as the aggregate for later use;
2) heating the aggregate to 170°C, adding bisphenol-A unsaturated polyester resin 10g to the aggregate, adding N,N,N-trimethyl chitosan quaternary ammonium salt 10g when the temperature was decreased to 130°C, and mixing uniformly;
3) cooling and screening the mixture obtained in step 2) to obtain the product.

### Example 12

The example provides a self-suspending proppant, which was prepared by the following steps:
1) taking 40-70 meshes bauxite ceramicite 1kg as the aggregate for later use;
2) heating the aggregate to 200°C, adding bisphenol-A unsaturated polyester resin 10g to the aggregate, adding amphoteric polyacrylamide 10g when the temperature was decreased to 130°C, and mixing uniformly;
3) cooling and screening the mixture obtained in step 2) to obtain the product.

### Example 13

The example provides a self-suspending proppant, which was prepared by the following steps:
1) using quartz sand (river sand) as a raw material, scrubbing and drying at 120°C for 5h till no water is contained in the sand at all, and screening 20-40 meshes quartz sand as the aggregate;
2) taking the quartz sand treated in step 1) 1kg, heating to 200°C, adding epoxy resin E51(618) 10g, stirring (the temperature of the mixture was decreased to 170°C during the stirring), adding o-phthalmic acid anhydride 1g as a curing agent, and stirring uniformly;
3) when the temperature of the mixture obtained in Step 2) was decreased to 140°C, adding carboxymethyl cellulose 8g, and stirring evenly;
4) cooling and screening to obtain a particle having a particle size of 20-40 meshes, wherein the surface of the aggregate is coated or partially coated with a carboxymethyl cellulose polymer material.

### Example 14

The example provides a self-suspending proppant, which was prepared by the following steps:
1) taking 40-70 meshes quartz sand (river sand) 1kg as the aggregate for later use;
2) heating the aggregate to 200°C, adding epoxy resin E-55(616) 10g to the aggregate, adding polycaprolactone 10g when the temperature was decreased to 140°C, then adding imidazole 0.2g and mixing uniformly;
3) cooling to obtain a particle having a particle size of 40-70 meshes, wherein the surface of the aggregate is coated or partially coated with a polycaprolactone polymer material.

### Example 15

The example provides a self-suspending proppant, which was prepared by the following steps:
1) taking 30-50 meshes quartz sand (river sand) 1kg as the aggregate for later use;
2) heating the aggregate to 220°C, adding bisphenol-A unsaturated polyester resin 3301 12g to the aggregate, adding carboxymethyl hydroxypropyl guar gum 5g when the temperature was decreased to 130°C, then adding benzoyl peroxide 0.1g and mixing uniformly;
3) cooling and screening the mixture obtained in step 2) to obtain the product.

### Example 16

The example provides a self-suspending proppant, which was prepared by the following steps:
1) taking 30-50 meshes ceramicite (in the present invention, the ceramicite with density of high, medium or low can be used, and in this example, the ceramicite with bulk density of 1.7g/cm³ is selected) 1kg as the aggregate for later use;
2) heating the aggregate to 220°C, adding bisphenol-A unsaturated polyester resin 3301 12g to the aggregate, stirring, adding benzoyl peroxide 0.1g, adding anionic polyacrylamide 5g when the temperature was decreased to 140°C, and mixing uniformly;
3) cooling and screening the mixture obtained in step 2) to obtain the product.

### Example 17

The example provides a self-suspending proppant, which was prepared by the following steps:
1) taking 40-70 meshes ceramicite (in the present invention, the ceramicite with density of high, medium or low can be used, and in this example, the ceramicite with bulk density of 1.7g/cm³ is selected) 1kg as the aggregate for later use;
2) heating the aggregate to 220°C, adding bisphenol-A unsaturated polyester resin 10g to the aggregate, stirring, adding benzoyl peroxide 0.2g, adding polyvinyl acetate 10g when the temperature was decreased to 140°C, and mixing uniformly;
3) cooling and screening the mixture obtained in step 2) to obtain the product.

### Example 18

The example provides a self-suspending proppant, which was prepared by the following steps:
1) taking 30-50 meshes sintered bauxite 1kg as the aggregate for later use;
2) heating the aggregate to 210°C, adding o-phthalate unsaturated polyester 191 10g to the aggregate, adding hydroxymethyl cellulose 5g when the temperature was decreased to 130°C, adding benzoyl peroxide 0.02g and peroxyketal 0.01g, and mixing uniformly;
3) cooling and screening the mixture obtained in step 2) to obtain the product.

### Example 19

The example provides a self-suspending proppant, which was prepared by the following steps:
1) taking the mixture 1kg of 70-140 meshes sintered bauxite and sintered alumina (which respectively account for a half of the mixture) as the aggregate for later use;
2) heating the aggregate to 210°C, adding epoxy resin E51 (618) 12g to the aggregate, stirring, adding aromatic amine 3g as a curing agent, and adding carboxymethyl hydroxypropyl guargum 10g when the temperature was decreased to below 140°C;
3) cooling and screening the mixture obtained in step 2) to obtain the product.

### Example 20

The example provides a self-suspending proppant, which was prepared by the following steps:
1) taking 40-70 meshes stainless steel microsphere 1kg as the aggregate for later use;
2) heating the aggregate to 220°C, adding xylene unsaturated polyester resin 10g to the aggregate, successively adding chitosan 10g and methyl ethyl ketone peroxide 0.3g as a curing agent when the temperature was decreased to 140°C, and stirring uniformly;
3) cooling and screening the mixture obtained in step 2) to obtain the product.

### Example 21

The example provides a self-suspending proppant, which was prepared by the following steps:
1) using quartz sand (river sand) 1kg as a raw material, scrubbing and drying till no water is contained in the sand at all, and screening 20-40 meshes quartz sand as the aggregate (in the following examples, pretreating processes of the quartz sand are the same);
2) mixing epoxy resin E-55 and ethyl acetate at the ratio of 1:1, stirring evenly to obtain 50mL of an adhesive solution, and then adding the aggregate and guargum 10g into the adhesive solution,
3) drying the mixture obtained in step 2) at 80°C for 2 h, and then screening.

The proppant obtained in this example has a particle size of 20-40 meshes, and the surface of the aggregate is coated or partly coated with a guargum polymer material.

### Example 22

The example provides a self-suspending proppant, which was prepared by the following steps:
1) using quartz sand (aeolian sand) 1kg as a raw material for later use;
2) mixing epoxy resin E-51 with ethyl formate at a ratio of 1: 1 , stirring uniformly to obtain 50mL of an adhesive solution, and then adding aggregate, carboxymethyl guar 10g to the adhesive solution,
3) drying the mixture obtained in step 2) at 80°C for 4h, and screening to obtain the product.

### Example 23

The example provides a self-suspending proppant, which was prepared by the following steps:
1) taking 30-50 meshes quartz sand (sea sand) and sintered alumina 1 kg (quartz sand and sintered alumina having the same particle size and being in a weight ratio of 8:2) as the aggregate for later use;
2) taking A-stage phenolic resin 8g, adding ethanol 20g, stirring evenly, and then adding the aggregate and polyacrylamide 10g into the adhesive solution,
3) naturally drying the mixture obtained in step 2), and screening to obtain the product.

### Example 24

The example provides a self-suspending proppant, which was prepared by the following steps:
1) using quartz sand (river sand) as a raw material, scrubbing and drying at 120°C for 5h till no water is contained in the sand at all, and screening 20-40 meshes quartz sand 1kg as the aggregate;
2) adding guargum 8g (with viscosity of 150 mPa.S at room temperature) at room temperature, stirring uniformly, drying, cooling, and screening.

The proppant obtained in this example has a particle size of 20-40 meshes, and the surface of the aggregate is coated or partly coated with a guargum polymer material.

### Example 25

The example provides a self-suspending proppant, which was prepared by the following steps:
1) taking 30-50 ceramicite 1kg as the aggregate for later use;
2) heating the aggregate to 200°C, when the temperature was decreased to 140 °C, adding 50% aqueous solution of anionic polyacrylamide 5g, and mixing uniformly;
3) drying and screening the mixture obtained in step 2) to obtain the product.

### Example 26

The example provides a self-suspending proppant, which was prepared by the following steps:
1) taking 30-50 meshes coated sand 1kg (prepared according to the method disclosed in example 1 of patent literature CN1274626A) as the aggregate for later use;
2) heating the aggregate to 200°C, when the temperature dropped to 130 °C, adding 50% aqueous solution of anionic polyacrylamide (with molecular weight of 3 million) 5 g, and mixing uniformly;
3) drying and screening the mixture obtained in step 2) to obtain the product.

### Comparative example 1

Proppant: a common ceramicite proppant with granularity of 20-40 meshes.

### Comparative example 2

Proppant: quartz sand with granularity of 20-40 meshes.

### Comparative example 3

Proppant: coated sand prepared according to the method disclosed in example 2 of patent literature CN1640981A.

### Test example 1

Active water: anionic polyacrylamide (3 million) 0.25g, OP-10 1g, potassium chloride 10g, formaldehyde 0.1g and water 488.65g.
Preparation process of the active water: dissolving the specific amount of polyacrylamide in 488.65g of water, mixing uniformly to obtain gelled water; dissolving the specific amount of OP-10 in the obtained gelled water and mixing uniformly; adding 10g of potassium chloride, stirring evenly; adding 0.1g of formaldehyde, and stirring evenly.
Clean water: tap water
Test method: performing fluid viscosity, carrying capability and friction parameter tests on the proppants of examples 1-10 and comparative examples 1-3 in the active water respectively, wherein the viscosity test is performed according to standard (SYT5107-2005); for settling rate test, using a 0.5m plexiglass tube, loading active water to a height of 45 cm and proppant with proppant concentration of 30%, and shaking uniformly to test the settling rate of the proppant; for friction parameter test, using a DV-III viscometer, preparing a fracturing system with proppant concentration of 30%, fixing a rotation speed and a rotor, and testing their torques for characterization. Test results are shown in Tables 1-3.

**TABLE 1 VISCOSITY OF ACTIVE WATER AFTER ADDITION OF PROPPANTS OF EXAMPLES 1-10**

| Viscosity/ mPa·s under 100r | | | | | | | | | | | | |
|---|---|---|---|---|---|---|---|---|---|---|---|---|
| 1 | 2 | 3 | 4 | 5 | 6 | 7 | 8 | 9 | 10 | CE1 | CE2 | CE3 |
| 1.21 | 1.27 | 1.08 | 1.40 | 1.32 | 1.01 | 1.12 | 1.00 | 1.02 | 1.03 | 3.93 | 3.91 | 2.86 |

In Table 1, mass ratio of the proppant to active water is 30:100. The sequence numbers 1, 2, .... represent example 1, example 2, ...., the sequence number "CE1" represents comparative example 1.

**Table 2 SETTLING RATE OF PROPPANTS OF EXAMPLES 1-10 AND COMPARATIVE EXAMPLES INACTIVE WATER**

| Proppant concentration/% | Setting rate/cm·min⁻¹ | | | | | | | | | | | | |
|---|---|---|---|---|---|---|---|---|---|---|---|---|---|
| | 1 | 2 | 3 | 4 | 5 | 6 | 7 | 8 | 9 | 10 | CE1 | CE2 | CE3 |
| 30 | 0.1 | 0.01 | 0.1 | 0.01 | 0.05 | 1.5 | 2.0 | 2.0 | 0.9 | 1.0 | 80 | 90 | 50 |

**TABLE 3 FRICTION RESISTANCE OF PROPPANTS OF EXAMPLES 1-10 AND COMPARATIVE EXAMPLES INACTIVE WATER**

| Proppant concentration /% | Torque/% | | | | | | | | | | | | |
|---|---|---|---|---|---|---|---|---|---|---|---|---|---|
| | 1 | 2 | 3 | 4 | 5 | 6 | 7 | 8 | 9 | 10 | CE1 | CE2 | CE3 |
| 30 | 23 | 20 | 15 | 16 | 18 | 39 | 37 | 49 | 55 | 19 | 48 | 42 | 39 |

Test results show that the self-suspending proppant of the present invention has excellent carrying ability and friction resistance reducing ability in active water.

Test method: performing fluid viscosity, carrying capability and friction resistance parameter tests on the proppants of examples 1-10 and comparative examples 1-3 in clean water respectively, wherein the viscosity test is performed according to standard (SYT5107-2005); for settling rate test, using a 0.5m plexiglass tube, loading clean water to a height of 45 cm and proppant with proppant concentration of 30%, and shaking uniformly to test the settling rate of the proppant; for friction resistance test, using a DV-III viscometer to prepare a fracturing system with proppant concentration of 30%, fixing a rotation speed and a rotor, and testing their torques for characterization. Test results are shown in Tables 4-6.

**TABLE 4 VISCOSITY OF CLEAN WATER AFTER ADDITION OF PROPPANTS OF EXAMPLES 1-10 AND COMPARATIVE EXAMPLES**

| Viscosity/ mPa·s under 100r | | | | | | | | | | | | |
|---|---|---|---|---|---|---|---|---|---|---|---|---|
| 1 | 2 | 3 | 4 | 5 | 6 | 7 | 8 | 9 | 10 | CE1 | CE2 | CE3 |
| 1.21 | 1.27 | 1.08 | 1.40 | 1.32 | 1.01 | 1.12 | 1.00 | 1.10 | 1.02 | 2.89 | 2.71 | 2.06 |

**TABLE 5 SETTLING RATE OF PROPPANTS OF EXAMPLES1-10 AND COMPARATIVE EXAMPLES IN CLEAN WATER**

| Proppant concentration /% | settling rate /cm·min⁻¹ | | | | | | | | | | | | |
|---|---|---|---|---|---|---|---|---|---|---|---|---|---|
| | 1 | 2 | 3 | 4 | 5 | 6 | 7 | 8 | 9 | 10 | CE1 | CE2 | CE3 |
| 30 | 0.1 | 0.05 | 0.02 | 0.1 | 0.08 | 4.5 | 2.9 | 5.4 | 6.2 | 1.8 | 190 | 270 | 100 |

The proppants prepared in examples 1-10 in this application were added to clean water according to proppant concentrations (weight part ratio of proppant: water) of 10:100, 20:100, 30:100, and after stirring, all proppants could suspend for more than 2h.

The proppants prepared in comparative examples 1-3 were added to clean water according to proppant concentrations (weight part ratio of proppant: water) of 10:100, 20:100, 30:100, and after stirring, quartz sand settled by 0.5m in 10 seconds, for ceramicite, it was 15 seconds and for coated sand, it was about 30 seconds.

**TABLE 6 FRICTION RESISTANCE OF PROPPANTS IN CLEAN WATER**

| Proppant concentration /% | torque/% | | | | | | | | | | | | |
|---|---|---|---|---|---|---|---|---|---|---|---|---|---|
| | 1 | 2 | 3 | 4 | 5 | 6 | 7 | 8 | 9 | 10 | CE1 | CE2 | CE3 |
| 30 | 28 | 21 | 19 | 17 | 21 | 69 | 57 | 59 | 63 | 40 | 60 | 59 | 53 |

Test results show that, the proppant of the present invention has excellent carrying capability and friction resistance reducing ability in clean water.

The test results of examples 13-26 are listed in the tables below (the test methods are the same as above)

**TABLE 7 VISCOSITY OF ACTIVE WATER AFTER ADDITION OF PROPPANTS OF EXAMPLES 13-23**

| viscosity/mPa·s under 100r | | | | | | | | | | |
|---|---|---|---|---|---|---|---|---|---|---|
| 13 | 14 | 15 | 16 | 17 | 18 | 19 | 20 | 21 | 22 | 23 |
| 1.21 | 1.27 | 1.08 | 1.01 | 1.32 | 1.01 | 1.12 | 1.08 | 1.21 | 1.27 | 1.08 |

**TABLE 8 SETTLING RATE OF PROPPANTS OF EXAMPLES 13-23 IN ACTIVE WATER**

| Proppant concentration% | Settling rate/cm·min⁻¹ | | | | | | | | | | |
|---|---|---|---|---|---|---|---|---|---|---|---|
| | 13 | 14 | 15 | 16 | 17 | 18 | 19 | 20 | 21 | 22 | 23 |
| 30 | 0.1 | 0.01 | 0.01 | 0.02 | 0.02 | 2.0 | 1.0 | 1.0 | 0.05 | 0.05 | 0.05 |

**TABLE 9 FRICTION RESISTANCE OF PROPPANTS OF EXAMPLES 13-23 IN ACTIVE WATER**

| Proppant concentration% | torque/% | | | | | | | | | | |
|---|---|---|---|---|---|---|---|---|---|---|---|
| | 13 | 14 | 15 | 16 | 17 | 18 | 19 | 20 | 21 | 22 | 23 |
| 30 | 28 | 21 | 19 | 17 | 21 | 69 | 57 | 59 | 28 | 21 | 19 |

Test results shows that the self-suspending proppant of the present invention has excellent carrying capability and friction resistance reducing ability in active water.

**TABLE 10 VISCOSITY OF CLEAN WATER AFTER ADDITION OF PROPPANTS OF EXAMPLES 13-23**

| Viscosity / mPa·s under100r | | | | | | | | | | |
|---|---|---|---|---|---|---|---|---|---|---|
| 13 | 14 | 15 | 16 | 17 | 18 | 19 | 20 | 21 | 22 | 23 |
| 1.11 | 1.17 | 1.05 | 1.21 | 1.22 | 1.0 | 1.01 | 1.0 | 1.21 | 1.27 | 1.08 |

**TABLE 11 SETTLING RATE OF PROPPANTS OF EXAMPLES 13-20 IN CLEAN WATER**

| Proppant concentration % | Settling rate/cm·min⁻¹ | | | | | | | |
|---|---|---|---|---|---|---|---|---|
| | 13 | 14 | 15 | 16 | 17 | 18 | 19 | 20 |
| 30 | 0.1 | 0.05 | 0.05 | 0.05 | 0.1 | 4.5 | 2.9 | 5.4 |

The proppants prepared in examples 1-12 were added to clean water according to proppant concentrations (volume ratio of proppant: water) of 10:100, 20:100, 30:100, and after stirring, the proppants could suspend for more than 2h.

**TABLE 12 FRICTION RESISTANCE OF PROPPANTS OF EXAMPLES 13-23 IN CLEAN WATER**

| Proppant concentration% | Torque/% | | | | | | | | | | |
|---|---|---|---|---|---|---|---|---|---|---|---|
| | 13 | 14 | 15 | 16 | 17 | 18 | 19 | 20 | 21 | 22 | 23 |
| 30 | 28 | 21 | 19 | 17 | 21 | 69 | 57 | 59 | 28 | 21 | 19 |

Test results show that, the proppant of the present invention has excellent carrying capability and friction resistance reducing ability in a natural water fracturing system.

### Test example 2

With reference to *OIL AND GAS INDUSTRY STANDARDS OF THE PEOPLE'S REPUBLIC OF CHINA,* Assessment Method for Short-Term Flow Conductivity of Fracturing Proppant Filling Formation, namely APIRP61, permeabilities of different proppant filling formations were tested; mechanical property test was carried out in accordance with the standard SY/T5108-2006, each experimental group was named the same as above. Test results of the examples and comparative examples are shown in Tables 13-16

**TABLE 13 PERMEABILITY RESULT OF TEST GROUPS(UNIT: µM².CM)**

| Closure pressure MPa | 1 | 2 | 3 | 4 | 5 | 6 | 7 | 8 | 9 | 10 | CE1 | CE2 | CE3 |
|---|---|---|---|---|---|---|---|---|---|---|---|---|---|
| 20 | 101 | 53 | 109 | 121 | 56 | 111 | 51 | 89 | 91 | 92 | 101 | 151 | 156 |
| 30 | 82 | 42 | 81 | 110 | 51 | 102 | 44 | 42 | 81 | 87 | 82 | 130 | 144 |
| 40 | 53 | 33 | 52 | 86 | 46 | 85 | 40 | 33 | 46 | 49 | 53 | 81 | 96 |
| 50 | 34 | 21 | 33 | 64 | 36 | 63 | 36 | 21 | 29 | 31 | 24 | 69 | 77 |
| 60 | 21 | 15 | 22 | 52 | 24 | 49 | 23 | 15 | 9 | 19 | 11 | 40 | 58 |
| 70 | 11 | 7 | 12 | 34 | 11 | 24 | 12 | 7 | 5 | 12 | 8 | 25 | 29 |

**TABLE 14 MECHANICAL STRENGTH TEST**

| Test item | 1 | 2 | 3 | 4 | 5 | 6 | 7 | 8 | 9 | 10 | CE1 | CE2 | CE3 |
|---|---|---|---|---|---|---|---|---|---|---|---|---|---|
| Single particle strength(N) | 22 | 28 | 26 | 22 | 39 | 37 | 29 | 39 | 39 | 30 | 24 | 23 | 27 |
| Crushing rate(%)(69MPa) | 3.2 | 2.0 | 2.4 | 3.3 | 1.3 | 0.9 | 0.3 | 1.1 | 0.2 | 1.2 | 2.0 | 2.8 | 2.4 |

**TABLE 15 PERMEABILITY RESULTS OF EXAMPLES 13-26(UNIT: µM².CM)**

| Closure pressure MPa | 13 | 14 | 15 | 16 | 17 | 18 | 19 | 20 | 21 | 22 | 23 | 24 | 25 | 26 |
|---|---|---|---|---|---|---|---|---|---|---|---|---|---|---|
| 20 | 101 | 91 | 109 | 121 | 56 | 101 | 51 | 89 | 101 | 53 | 109 | 101 | 119 | 109 |
| 30 | 82 | 72 | 81 | 110 | 51 | 92 | 44 | 42 | 82 | 42 | 81 | 82 | 102 | 81 |
| 40 | 53 | 53 | 52 | 86 | 46 | 80 | 40 | 33 | 53 | 33 | 52 | 53 | 86 | 52 |
| 50 | 34 | 31 | 33 | 64 | 36 | 53 | 36 | 21 | 34 | 21 | 33 | 24 | 54 | 33 |
| 60 | 21 | 19 | 22 | 52 | 24 | 49 | 23 | 15 | 21 | 15 | 22 | 11 | 28 | 22 |
| 70 | 11 | 10 | 12 | 34 | 11 | 20 | 12 | 7 | 11 | 7 | 12 | 8 | 12 | 12 |

**TABLE 16 MECHANICAL STRENGTH TEST OF EXAMPLES 13-26**

| Test items | 13 | 14 | 15 | 16 | 17 | 18 | 19 | 20 | 21 | 22 | 23 | 24 | 25 | 26 |
|---|---|---|---|---|---|---|---|---|---|---|---|---|---|---|
| Single particle strength, N | 28 | 29 | 26 | 22 | 39 | 37 | 29 | 39 | 22 | 28 | 26 | 22 | 28 | 26 |
| Crushing rate %69MPa | 3.2 | 2.0 | 2.4 | 3.3 | 1.3 | 0.9 | 0.3 | 1.1 | 3.2 | 2.0 | 2.4 | 3.2 | 2.0 | 2.4 |

Test results show that, the proppants of the present invention have excellent mechanical strength in a natural water fracturing system, and will not be broken in use.

### Test Example 3: Mining test

Changqing Oilfield, a horizontal old oil well with depth of 2,000 meters. The process is shown in Fig. 1
1) inputting natural water as fracturing fluid into a downhole reservoir to perform refracturing and form a geological fracture;
2) adding 100 volume parts of natural water and 30 volume parts of the self-suspending proppant of example 3 in a mixing tank, stirring to form a proppant suspension fluid and then inputting the proppant suspension fluid into the geological fracture to allow further extension of the geological fracture.

The pumping discharge in prior active water fracturing is 200 m³/hr. Now with the same pumping discharge, 3.0×10⁶L natural water and 9.0×10⁵kg self-suspending proppant of example 3 were used, and the oil pressure of the fracturing curve is decreased by 10%. It is inspected after backflow that all the polymer materials are back flowed.

### Test example 4: Mining test

This test example provides a construction method for fracturing with proppant carried in natural water, which is applied to natural gas wells, and comprises the following steps.

In this example, clean water from surface river was used as natural water, and there was no solid particles visually. The 20/40 meshes self-suspending proppant prepared by the method of example 7 was used in this example.
Step 1), preparing linear adhesive as pad fluid, wherein 0.3% aqueous solution of hydroxypropyl guargum is used as the linear adhesive and formed by fully swelling. Step 2), connecting fracturing construction pipes, testing the pressure with the pad fluid linear adhesive and fracturing a target reservoir.
Step 3), pumping clean water into a mix tank at the flow rate of 1.96m³/min in a state of continuous stirring, while conveying the self-suspending proppant into the mix tank at the rate of 0.84 m³/min, and mixing uniformly.
Step 4), pumping the suspension fluid mixed uniformly into the target reservoir fracture by a fracturing pumper at the rate the same as proppant mixing rate.

The pressure was steady during the whole construction which was continued for 2.5h, and after the construction was completed, the well was closed for 1.5h then backflow was carried out. The backflow fluid was clear after 3h of backflow and the backflow was completely finshed in 5h. At the initial stage, the natural gas yield was 700m³/day, which was slightly increased compared with adjacent well fracturing with the conventional guargum linear adhesive.

The above test was repeated with the products prepared in other examples of the present invention and the technical effect was the same.

The above embodiments are merely illustrative of the preferred embodiments of the present invention and are not intended to limit the scope of the present invention. Various modifications and improvements of the present invention can be made by the person skilled in the art without departing from the spirit of the present invention, all of which should fall within the protection scope defined by the claims of the present invention.

### Industrial Applicability

The self-suspending proppant of the present invention is a particulate aggregate coated with or partly coated with a water soluble polymer material; the aggregate is a solid particle having sufficient mechanical strength to withstand the closure stress of fractures, it is selected from one or more of quartz sand, ceramicite, metal particles, spherical glass particles, sintered bauxite, sintered alumina, sintered zirconia, synthetic resin, coated sand, and crushed nutshell particles; the amount of the water soluble polymer material is 0.1-5wt% based on the amount of the aggregate. With the self-suspending proppant of the present invention, fracturing does not need use of expensive fracturing fluid with added organic polymers, easily available natural water can be directly used for fracturing, thus reducing pollution and costs. The self-suspending proppant of the present invention can reduce the frictional resistance of the fracturing fluid, so that the fracturing propping system of the present invention has substantially the same performance as the existing fracturing fluid and is easy to transport and easy to backflow.

## Claims

1. A self-suspending proppant, **characterized in that** the said self-suspending proppant is a particulate aggregate coated with or partly coated with a water-soluble polymer material;
the aggregate is a solid particle having sufficient mechanical strength to withstand fracture closure stress, and is selected from one or more of quartz sand, ceramicite, metal particles, spherical glass particles, sintered bauxite, sintered alumina, sintered zirconia, synthetic resin, coated sand, and crushed nutshell particles; the metal particle is made of one or more of carbon steel, stainless steel, aluminum alloy, iron-nickel alloy and ferromanganese alloy;
the water-soluble polymer material is selected from natural polymer, synthetic polymer or semi-natural semi-synthetic polymer material, and the water-soluble polymer is used in an amount of 0.1-15wt% based on the amount of the aggregate.

2. The self-suspending proppant in accordance with claim 1, **characterized in that**, the aggregate has a size of 6-200 meshes.

3. The self-suspending proppant in accordance with claim 1, **characterized in that**, the natural polymer material is selected from starch, plant gum, animal glue or seaweed glue; the plant gum is one or more of gum arabic, gum tragacanth, locust bean gum, guar gum, sesbania gum and soybean gum; the animal glue is one or more of bone glue, gelatin, casein and chitosan; and the seaweed gel is one or more of sodium salt of alginic acid, sodium alginate and agar; the water-soluble polymer material is an organic material which swells or is dissolved rapidly in water, and is selected from a natural polymer material, a synthetic polymer material or a semi-natural semi-synthetic polymer material;
the synthetic polymer material comprises condensed and polymeric polymer materials; wherein, the condensed polymer material is selected from one or more of polyamine resin, amino resin and polyurethane resin; and the polymeric polymer material is selected from one or more of polyacrylamide, polyacrylic acid, polyethylene glycol, polyethylene oxide, polymaleic anhydride and polyquaternium; the semi-natural semi-synthetic polymer material comprises modified starch, modified cellulose and modified plant gum, is specifically selected from one or more of starch derivatives, carboxymethyl starch, hydroxymethyl cellulose, methyl cellulose, ethyl cellulose,
hydroxyethyl cellulose, carboxyethyl starch, acetate starch, hydroxymethyl guargum, hydroxypropyl guargum, carboxymethyl hydroxypropyl guargum.

4. The self-suspending proppant in accordance with claim 1, **characterized in that**, the particulate aggregate is further coated with an adhesive, the adhesive comprises all materials having the function of adhesion, comprising natural adhesive and synthetic adhesive, the natural adhesive comprises animal glue, plant gum and mineral glue; the animal glue is selected from one or more of skin glue, bone glue, shellac, casein glue, albumin glue and fish glue; the plant gum is selected from one or more of starch, dextrin, turpentine, tung oil, gum arabic and natural rubber; the mineral glue is selected from one or more of mineral wax and asphalt; the synthetic adhesive is selected from one or more of phenolic resin, epoxy resin, unsaturated polyester resin and heterocyclic polymer adhesive, and the amount of adhesive is 0.5-15wt% based on the amount of the aggregate.

5. The self-suspending proppant in accordance with claim 3, **characterized in that**, the phenolic resin is thermoplastic phenolic resin and/or thermosetting phenolic resin;
the epoxy resin is selected from one or more of epoxy resins E-42, E-35, E-20(601), E-14, E-12, E-06, E-03, E-55(616), E-51(618), E-44(6101), E-42(634), E-35(637), E-20(601), E-12(604), E-06(607) and E-03(609);
the unsaturated polyester resin is one or more of o-phthalate unsaturated polyester resin, m-phthalate unsaturated polyester resin, xylene type unsaturated polyester resin, bisphenol-A unsaturated polyester resin, halogenated unsaturated polyester resin and vinyl ester resin; the unsaturated polyester resin is preferably one or more of o-phthalate unsaturated polyester resin 191 or 196, m-phthalate unsaturated polyester resin 199, and xylene type unsaturated polyester resins 2608, 902A3, Xm-1 and Xm-2; the unsaturated polyester resin is selected from one or more of bisphenol-A unsaturated polyester resins 197, 3301 and 323; the heterocyclic polymeric adhesive is selected from one or more of polyimide, polybenzimidazole, polyphenylene sulfide and polydiphenyl oxide.

6. A preparation method of the self-suspending proppant in accordance with any of claims 1-5, **characterized in that**, the suspending proppant is prepared by dispensing a water soluble polymer material in an aggregate.

7. The preparation method of the self-suspending proppant in accordance with claim 6, **characterized in that**, the suspending proppant is prepared by dispensing a water soluble polymer material in the aggregate at a temperature of 15-150°C;
the water soluble polymer material is one selected from plant gum, animal glue or microbial glue, and the amount of the water soluble polymer material is 0.5-15wt% based on the amount of the aggregate.

8. The preparation method of the self-suspending proppant in accordance with claim 7, **characterized in that**, the proppant is prepared by heating the aggregate to 170-200°C at first, and then dispensing the water soluble polymer material in the aggregate when the temperature of the aggregate is decreased to 80-150°C.

9. The preparation method of the self-suspending proppant in accordance with claim 6, **characterized in that**, the method comprising: using 6-200 meshes particles as the aggregate, adding an adhesive solution into the aggregate and stirring, wherein the adhesive solution is 10-30% of the aggregate by weight; and then adding the water soluble polymer material in an amount of 0.1-5% of the aggregate by weight and stirring; wherein the solvent of the adhesive solution is an organic solvent, the organic solvent is one or more selected form acetone, ethyl acetate, methyl acetate, chloroform, dimethylformamide, tetrahydrofuran, and ethanol.

10. The preparation method of the self-suspending proppant in accordance with claim 6, **characterized in that**, the self-suspending proppant is prepared by dispensing an adhesive in the aggregate, adding a curing agent, and adding a water soluble polymer material;
or, the self-suspending proppant is prepared by dispensing an adhesive in the aggregate, adding a water soluble polymer material, and adding a curing agent; wherein, the curing agent is one of aliphatic amine and the adduct thereof, tertiary amine and the salt thereof, aromatic amine and the modified product thereof, imidazole, anhydride, acyl peroxide, lipid peroxide, paraformaldehyde, phenol-aldehyde amine, diethylenetriamine, triethylenetetramine, and hexamethylenetetramine; and the curing agent is 0.5-10% of the adhesive by weight.

11. The preparation method of the self-suspending proppant in accordance with claim 7, **characterized in that**, comprising the following steps:
1) using one or more of quartz sand, ceramicite, metal particles, spherical glass particles, sintered bauxite, sintered alumina, sintered zirconia, synthetic resin, coated sand and crushed nutshell particles as the aggregate;
heating the aggregate to 50-300°C, cooling to below 240°C, adding an adhesive in an amount of 0.5-15wt% of the aggregate by weight and stirring;
2) when the temperature of the mixture obtained in step 1) is decreased to below 150°C, adding the water soluble polymer material in an amount of 0.1-5wt% of the aggregate by weight, and stirring.

12. The preparation method of the self-suspending proppant in accordance with claim 11, **characterized in that**, a curing agent is added in step 1) or step 2).

13. The preparation method in accordance with claim 6, comprising the following steps:
1) using one or more of quartz sand, ceramicite, coated sand, metal particles, spherical glass particles, sintered bauxite, sintered alumina, sintered zirconia, synthetic resin and crushed nutshell particles as the aggregate; adding an adhesive in an amount of 0.5-15wt% of the aggregate by weight and stirring;
2) adding the water soluble polymer material in an amount of 0.1-5wt% of the aggregate by weight, adding a curing agent and stirring.

14. The preparation method in accordance with claim 11 or claim 13, **characterized in that**, the method further comprising steps of cooling and screening after step 2).

15. A construction method for fracturing with natural water, **characterized in that**, the construction method comprising: adding 5-60 volume parts of the self-suspending proppant in accordance with any of claims 1-5 into 100 volume parts of natural water as a carrier fluid to form hydraulic fracturing suspension fluid, then transporting the resultant suspension fluid into an underground rock formation; the natural water as a carrier fluid is selected from one or more of river water, aquaculture water, lake water, seawater and groundwater.

16. The construction method for fracturing with natural water in accordance with claim 15, **characterized in that**, the construction method comprising: firstly using one of gel, linear adhesive, slick water or natural water as a pad fluid, pumping the pad fluid with a high-pressure pumper and fracturing a target reservoir to form an initial geological fracture.

17. The construction method for fracturing with natural water in accordance with claim 15, **characterized in that**, the rock formation is one of rock formation, shale formation, salt formation and sedimentary formation of a heavy oil reservoir.
